Europäisches Patentamt

European Patent Office

Office européen des brevets

Veröffentlichungsnummer: **0 284 906**

**A1**

**EUROPÄISCHE PATENTANMELDUNG**

Anmeldenummer: 88104233.7

Anmeldetag: 17.03.88

Int. Cl.4 **B01D 25/12**

Priorität: 28.03.87 DE 3710353

Veröffentlichungstag der Anmeldung:
05.10.88 Patentblatt 88/40

Benannte Vertragsstaaten:
AT BE CH DE ES FR GB IT LI NL SE

Anmelder: **RITTERSHAUS & BLECHER GMBH**
**Otto-Hahn-Strasse 42**
**D-5600 Wuppertal 21(DE)**

Erfinder: **Heinrich, Hans Jürgen**
**Wilhelmshöher Strasse 129**
**D-5828 Ennepetal(DE)**
Erfinder: **Oelbermann, Max, Dipl.-Ing.**
**Moltkestrasse 19**
**D-5630 Remscheid(DE)**

Vertreter: **Peerbooms, Rudolf, Dipl.-Phys.**
**Postfach 200 208 Dickmannstrasse 45C**
**D-5600 Wuppertal 2(DE)**

Kammerfilterpresse.

Eine Kammerfilterpresse besitzt eine Vielzahl von mit Filtertüchern (31, 32) überspannten Kammerplatten (1), die mit einem äußeren, umlaufenden Einspannrand (2) aneinanderliegen und zwischen sich jeweils eine Filterkammer einfassen, welche ihrerseits durch die Filtertücher (31, 32) in einen Filterkuchenraum (33) und in Filtraträume (34, 35) unterteilt ist, wobei in den Filtraträumen (34, 35) Nachpreßeinrichtungen für die Filterkuchen angeordnet sind.

Zur Erzielung preiswerter, hochdruckfester Nachpreßeinrichtungen bestehen diese jeweils aus einem mit eng benachbarten Windungen (54) auf einer Hauptfläche der zugehörigen Kammerplatte (1) verlegten und eine Druckmittelanschlußeinrichtung aufweisenden Blähschlauch (12, 13).

Fig.2

## Kammerfilterpresse

Die Erfindung betrifft eine Kammerfilterpresse, mit mindestens an einer Seite von einem Filtertuch übersoannten Kammerplatten, wobei jeweils zwei benachbarte Kammerplatten mit einem äußeren, umlaufenden Einspannrand aneinanderliegen und zwischen sich eine Filterkammer einfassen, welche ihrerseits durch das Filtertuch in einen Filterkuchenraum und in einen Filtraraum unterteilt ist, und mit in den Filtraräumen angeordneten Nachpreßeinrichtungen für die Filterkuchen.

Eine derartige Kammerfilterpresse ist beispielsweise durch die DE-OS 27 54 537 bekannt. Bei den dortigen Nachpreßeinrichtungen handelt es sich um gesonderte Preßmembranen, die zusätzlich zu den Filtertüchern auf den Kammerplatten aufgespannt sind. Auf diese Weise wird zwischen Preßmembranen und Filterplatten ein Druckmediumraum gebildet, welcher aufgrund der hohen Preßdrücke sorgfältig nach außen abgedichtet sein muß. Hierbei ist besonders die Abdichtung zwischen Preßmediumraum und Trübezufuhr, bzw. Filtratableitkanälen, problematisch. Auch in den übrigen Bereichen des umlaufenden Einspannrandes kann es leicht zu Leckagen kommen, da die Einspannkräfte der Preßmembran unmittelbar von dem maximalen Schließdruck abhängen, welcher auf das Plattenpaket ausgeübt werden kann.

Durch die DE-OSen 33 17 235 und 31 28 970 sind Rahmenfilterpressen bekannt, bei welchen Preßmembranen zwischen Stützplatten und gesonderten Einspannrahmen befestigt sind. Bei diesem Bautyp ist die Abdichtung des Preßmediumraumes besser gelöst, aber auch hier kann es nach längerem Betrieb durch Kriecherscheinungen zu Undichtigkeiten kommen. Außerdem hängt auch dort die Dichtwirkung im wesentlichen vom Schließdruck der Presse ab. In jedem Falle ist es aber ausgeschlossen, eine ältere Rahmenfilterpresse ohne Nachpreßeinrichtungen durch zwischen die Kammerplatten geschaltete Rahmen nachzurüsten, da hierdurch die Dicke des Plattenpaketes in unzulässiger Weise ansteigen würde.

Durch die US-PS 27 08 07 ist ferner die Verwendung von Blähkissen als Nachpreßeinrichtungen in Filterpressen bekannt, doch ist das Blähkissen dort in einer gesonderten Kammer lose eingelegt, welche beidseits durch bewegliche Druckplatten begrenzt ist. Bei Druckbeaufschlagung des Blähkissens werden diese Druckplatten gegen die angrenzenden Filtertücher und damit gegen den Filterkuchen gedrückt. Die dortige Konstruktion erfordert ein aufwendiges, zusätzliches Stützgehäuse für das Blähkissen, so daß sie für eine Nachrüstung älterer Kammerfilterpressen ungeeignet ist. Des weiteren ist durch die DE-AS 12 18 999 eine Filterpresse mit Blähkissen zum Auspressen des Filterkuchens bekannt, bei der das Blähkissen im Filterkuchenraum angeordnet ist, so daß anstelle eines großen zwei kleine Filterkuchen entstehen, die sich nach dem Öffnen des Plattenpaketes aufgrund ihres geringen Gewichtes nur schwer vom Filtertuch lösen lassen. Zudem läßt die dortige Bauform zur Halterung des Blähkissens eine Nachrüstung älterer Kammerfilterpressen nicht zu.

Durch die DE-OS 35 27 556 ist ferner eine Kammerfilterpresse bekannt, bei der die Nachpreßeinrichtungen für die Filterkuchen Blähkissen sind, die innerhalb des Filtratraumes an der jeweils angrenzenden Kammerplatte über Befestigungsmittel aufgehängt sind. Durch die Verwendung von Blähkissen wird die Abdichtung des Preßmediums gegenüber den Trübezufuhrleitungen und den Filtratablaufleitungen praktisch unabhängig vom Schließdruck der Kammerfilterpresse. Die Aufhängung der Blähkissen an der jeweils angrenzenden Kammerplatte über Befestigungsmittel sorgt außerdem dafür, daß die Blähkissen im drucklosen Zustand nicht in sich zusammenfallen und somit eine einwandfreie Positionierung gegenüber den Filtertüchern behalten. Allerdings sind solche Blähkissen, insbesondere wenn sie hohen Blähdrücken standhalten sollen, in der Herstellung aufwendig.

Der Erfindung liegt die Aufgabe zugrunde, eine gattungsgemäße Kammerfilterpresse zu schaffen, deren Nachpreßeinrichtungen hohen Druckbelastungen standhalten und in der Herstellung einfach und preiswert sind, wobei insbesondere auch ein nachträglicher Einbau bei Kammerfilterpressen mit geringem Aufwand möglich sein soll.

Zur Lösung dieser Aufgabe ist erfindungsgemäß vorgesehen, daß die Nachpreßeinrichtungen jeweils aus einem mit eng benachbarten Windungen auf einer Hauptfläche der zugehörigen Kammerplatte verlegten und eine Druckmittelanschlußeinrichtung aufweisenden Blähschlauch bestehen. Die Erfindung bietet den besonderen Vorteil, daß nunmehr für die Herstellung der Nachpreßeinrichtungen hochdruckfeste, preiswerte Schläuche verwendet werden können, bei denen auch nach langem Betrieb keine Dichtigkeitsprobleme auftreten. Zudem ist eine Nachrüstung älterer Kammerfilterpressen mit wesentlich weniger Aufwand als bei Blähkissen durchführbar, da beispielsweise spezielle Befestigungsmittel zur Anbringung der Blähschläuche an der Kammerplatte nicht notwendig sind. Des weiteren ist durch die Verwendung von geeignet verlegten Blähschläuchen ein gleichmäßiges Nachpressen der Filterkuchen bis zum Randbereich des Filterkuchenraumes gewährleistet.

Der Erfindung zufolge kann vorgesehen werden, daß der Blähschlauch etwa spiralförmig in einer Ebene verlegt ist, so daß scharfe Umlenkungen oder Abknickungen des Schlauches vermieden sind. Vorzugsweise ist auf beiden Seiten jeder Kammerplatte je ein Blähschlauch verlegt und ist jede Kammerplatte auf beiden Seiten von einem Filtertuch überspannt.

In Ausgestaltung der Erfindung kann ferner vorgesehen werden, daß das innere Schlauchende verschlossen ist und daß die Anschlußeinrichtung für das äußere Schlauchende in die Kammerfilterplatte eingelassen ist.

Nach einer ersten Ausführungsform kann die Anschlußeinrichtung eine zweiteilige, zusammenspannbare Schlauchwanddurchführung, welche ein in einen Plattendurchbruch einsteckbares, mit einem abgewinkelten Durchlaßkanal versehenes Paßstück umfaßt, und ein in eine randseitige Einpaßöffnung einsetzbares Anschlußstück aufweisen, welches einen, auf den Durchlaßkanal des Paßstücks ausgerichteten Druckmittelkanal besitzt, welcher über einen flexiblen Schlauch an eine außerhalb der Kammerplatten angeordnete Druckmittelzuleitung anschließbar ist.

Alternativ kann der Erfindung zufolge vorgesehen werden, daß die Anschlußeinrichtung aus einer rohrförmigen, mit einem Endstück in das äußere Schlauchende eingesteckten Schlauchtülle besteht, deren anderes Endstück in eine in einen Druckmitteldurchgangskanal der Kammerplatte mündenden Stichkanal der Kammerplatte dicht eingesetzt ist. Die Druckmittelzufuhr erfolgt hier über einen in den Rahmen der Kammerplatten ausgebildeten Durchgangskanal, was den Betrieb der Filterpresse beim Kuchenauswurf und bei einem Abspritzen der Filtertücher stark vereinfacht.

In Weiterbildung der Erfindung kann vorgesehen werden, daß jeder der Blähschläuche in seinem Verlegezustand durch Befestigungsmittel zu einem mattenartigen Flächengebilde zusammengehalten ist. Die Befestigungsmittel können aus, jeweils zwei benachbarte Schlauchwindungen umschließenden Schnüren besteht, die an einem Ende eine Öse und auf ihrer Länge verteilt Rastverdickungen aufweisen. Dabei werden die Schnüre, die sogenannte "Blitzverschlüsse" bilden, in Form einer "8" um jeweils zwei Schlauchwindungen gelegt, so daß die Schlauchwindungen verrutschsicher fixiert und miteinander gekoppelt sind.

Nach einer alternativen Ausführungsform kann ferner vorgesehen sein, daß die Befestigungsmittel aus das mattenförmige Flächengebilde zwischen sich einfassenden, jeweils zwei benachbarte Windungen miteinander verbindenden Bändern bestehen. Hierbei finden insbesondere Kunststoffbänder Anwendung, die zunächst ober-bzw. unterhalb der Schlauchwindungen in ihrer vollen Länge positioniert werden und dann beispielsweise mittels Ultraschallschweißen jeweils zwischen zwei Schlauchwindungen miteinander verbunden werden. Bei der Verwendung von Gewebebändern kann diese Verbindung auch durch Vernähen erfolgen.

Die Erfindung ist ferner auf eine Vorrichtung zur Verlegung des Blähschlauches gerichtet, die gekennzeichnet ist durch eine Verlegematrix in Form einer kammerplattengroßen Grundplatte, welche mit die Windungen des Blähschlauches vorfixierenden und distanzierenden Schlauchumlenkbolzen bestückt ist. Der Blähschlauch wird auf der Verlegematrix den Filterplattenkonturen entsprechend vorverlegt, wobei mit dem inneren, verschlossenen Schlauchende beginnend, der Blähschlauch spiralförmig entsprechend der Verlegematrix verlegt wird. Danach erfolgt die Fixation mit Hilfe der Befestigungsmittel, so daß der Blähschlauch insgesamt eine der Filterkammerform angepaßte Anordnung besitzt, die zudem verrutschsicher fixiert ist.

Der Gegenstand der Erfindung wird im folgenden anhand der Zeichnung näher erläutert. In der Zeichnung zeigen:

Fig. 1 eine Frontansicht auf eine mit einem Blähschlauch versehene Kammerplatte einer Kammerfilterpresse nach der Erfindung,

Fig. 2 zwei benachbarte Kammerplatten in einem Schnitt gemäß der Linie II-II in Fig. 1,

Fig. 3 einen Teilschnitt gemäß der Schnittebene III-III in Fig. 1 durch die Anschlußeinrichtung des Blähschlauches,

Fig. 4 einen Schnitt gemäß der Linie IV-IV in Fig. 3,

Fig. 5 teils im Schnitt, teils in Draufsicht eine abgewandelte Ausführungsform einer Anschlußeinrichtung des Blähschlauches,

Fig. 6 in Frontansicht eine Verlegematrix für den Blähschlauch,

Fig. 7 ein erstes Ausführungsbeispiel für die Fixierung der Windungen des Blähschlauches,

Fig. 8 ein zweites Ausführungsbeispiel für die Fixierung der Windungen des Blähschlauches und die

Fig. 9, 10, 11 drei Skizzen zur Erläuterung der Wirkungsweise des Blähschlauches.

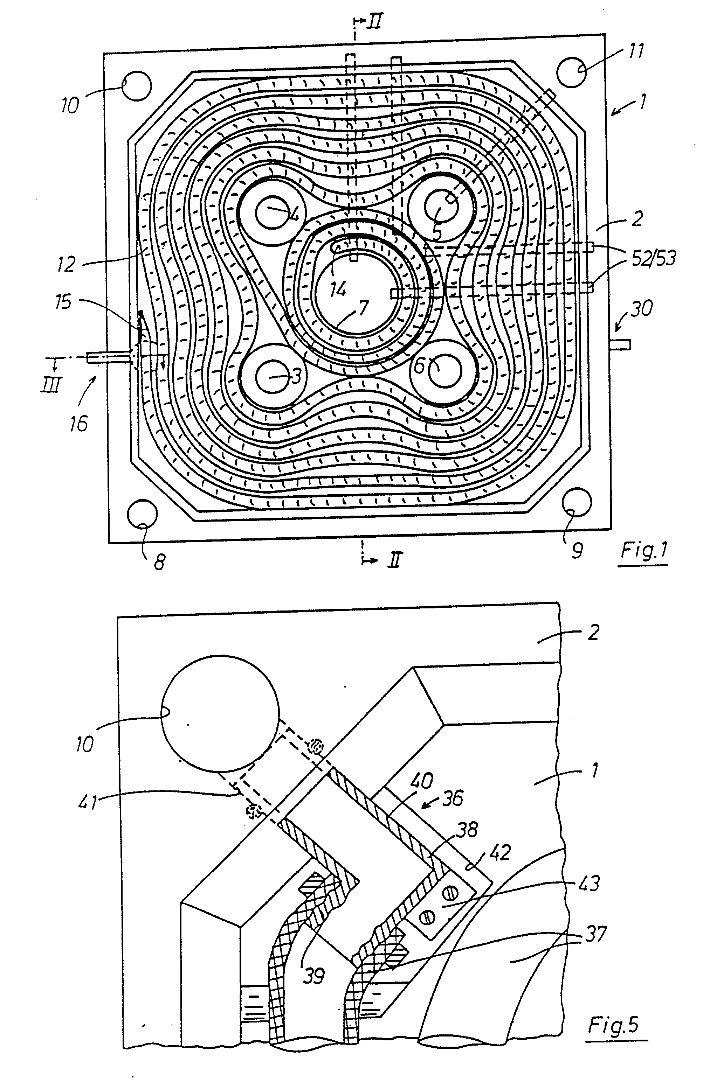

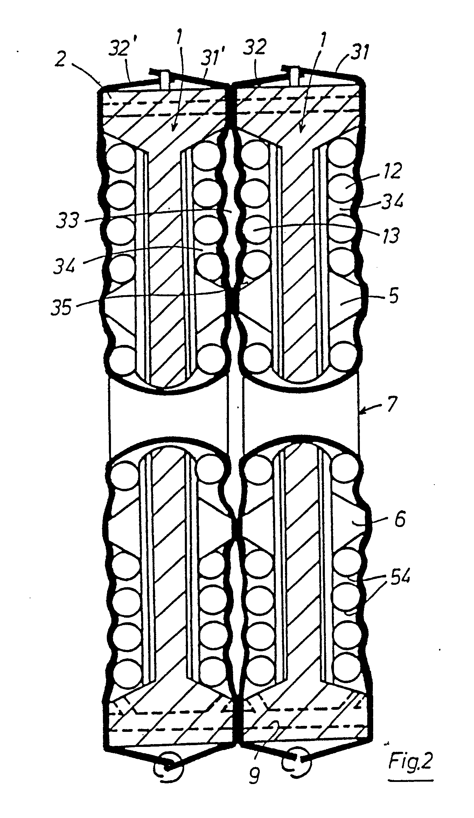

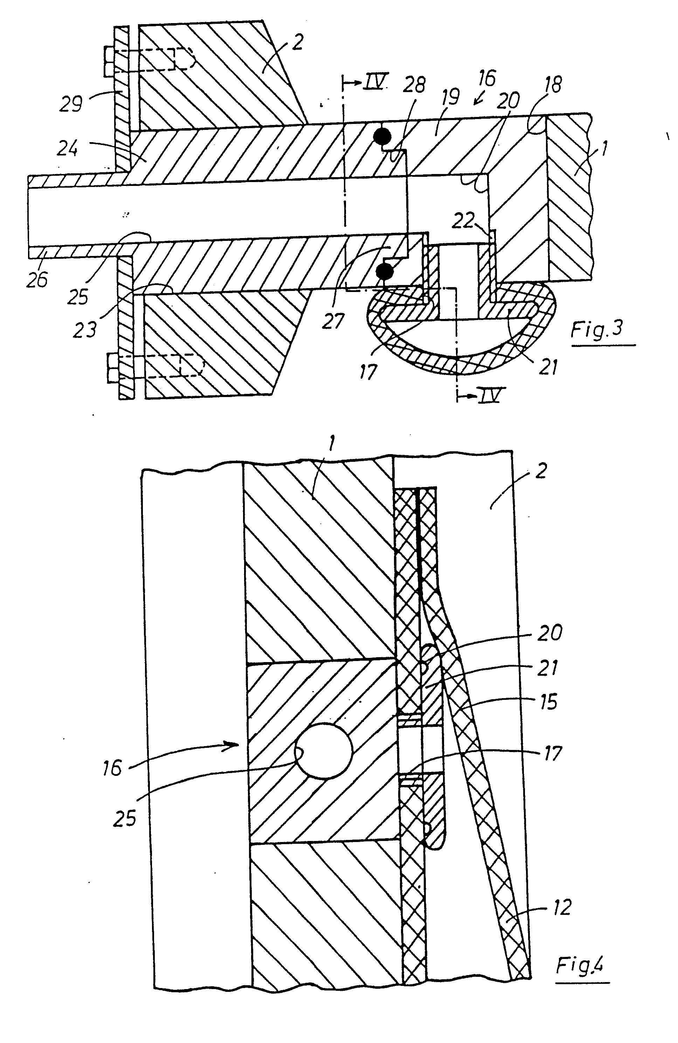

Fig. 1 zeigt eine Kammerplatte 1 einer Kammerfilterpresse, die einen verdickten, umlaufenden Einspannrand 2, vier Stütznocken 3, 4, 5, 6 und eine mittige Trübezufuhröffnung 7 aufweist. An ihren unteren Ecken ist die Kammerplatte 1 im Bereich des Einspannrandes 2 mit zwei weiteren Durchgangsbohrungen 8, 9 für den Filtratablauf und an den oberen Ecken mit zwei Durchgangslöchern 10, 11 für beispielsweise ein Preßmedium versehen. Die Kammerplatte 1 ist an ihren beiden Hauptflächen, vgl. auch Fig. 2, jeweils mit einem Blähschlauch 12, 13 belegt, der - unter Auslassung der Trübezufuhröffnung 7, der Stütznocken 3 bis 6 und des Einspannrandes 2 - im wesentlichen spiralförmig mit eng benachbarten Windungen verlegt ist. Das innere Ende 14 des Blähschlauches 12 ist verschlossen, und das äußere Ende 15 des Blähschlauches ist mit einer Anschlußeinrichtung 16 verbunden, die in die Kammerplatte 1 oberflächenbündig eingelassen ist. Der Blähschlauch 12 ist an seinem äußeren Ende 15 durch Verschweißen oder Verkleben verschlossen, vgl. auch Fig. 3 und 4, und kurz hinter seinem verschlossenen Ende mit einem Schlauchmanteldurchbruch 17 versehen, an welchem der Blähschlauch 12 an die Anschlußeinrichtung 16 angeschlossen ist. Die Anschlußeinrichtung 16 besteht aus einer zweiteiligen, zusammenspannbaren Schlauchwanddurchführung, welche aus einem in einen Plattendurchbruch 18 eingesteckten Paßstück 19 mit rechtwinklig abgewinkeltem Durchlaßkanal 20 und einer Flanschhülse 21 besteht. Die Flanschhülse 21 ist mit Außengewinde versehen und unter Einfassung der Ränder des Schlauchmanteldurchbruches 17 in einen Gewindeabschnitt 22 des Durchlaßkanales 20 stramm und abdichtend eingeschraubt. Die Anschlußeinrichtung 16 umfaßt ferner ein in eine randseitige Einpaßöffnung 23 eingesetztes Anschlußstück 24, welches einen auf den Durchlaßkanal 20 des Paßstückes 19 ausgerichteten Druckmittelkanal 25 besitzt und einen außen vorragenden Anschlußstutzen 26 besitzt, an welche eine flexible Druckmittelzuleitung anschließbar ist. Das Anschlußstück 24 greift mit einem Zentrieransatz 27 in eine angepaßte Ausnehmung 28 des Paßstückes 19 ein und ist durch einen äußeren, angeschraubten Flanschring 29 unter Einspannung einer O-Ringdichtung stramm gegen das Paßstück 19 gezogen.

Der an der anderen Hauptfläche der Kammerplatte 1 verlegte Blähschlauch 13 ist am gegenüberliegenden Plattenrand an eine Anschlußeinrichtung 30 angeschlossen, welche in gleicher Weise ausgebildet ist wie die Anschlußeinrichtung 16. Die Kammerplatte 1 ist an ihren beiden Seiten mit je einem Filtertuch 31, 32, 31', 32' überspannt, vgl. Fig. 2, wobei jeweils zwei benachbarte Kammerplatten 1, 1' eine Filterkammer begrenzen, die durch die Filtertücher 32, 31' in einen Filterkuchenraum 33 und zwei Filtraträume 34, 35 unterteilt ist. Die Blähschläuche 12, 13 sind jeweils in den Filtraträumen 34, 35 angeordnet.

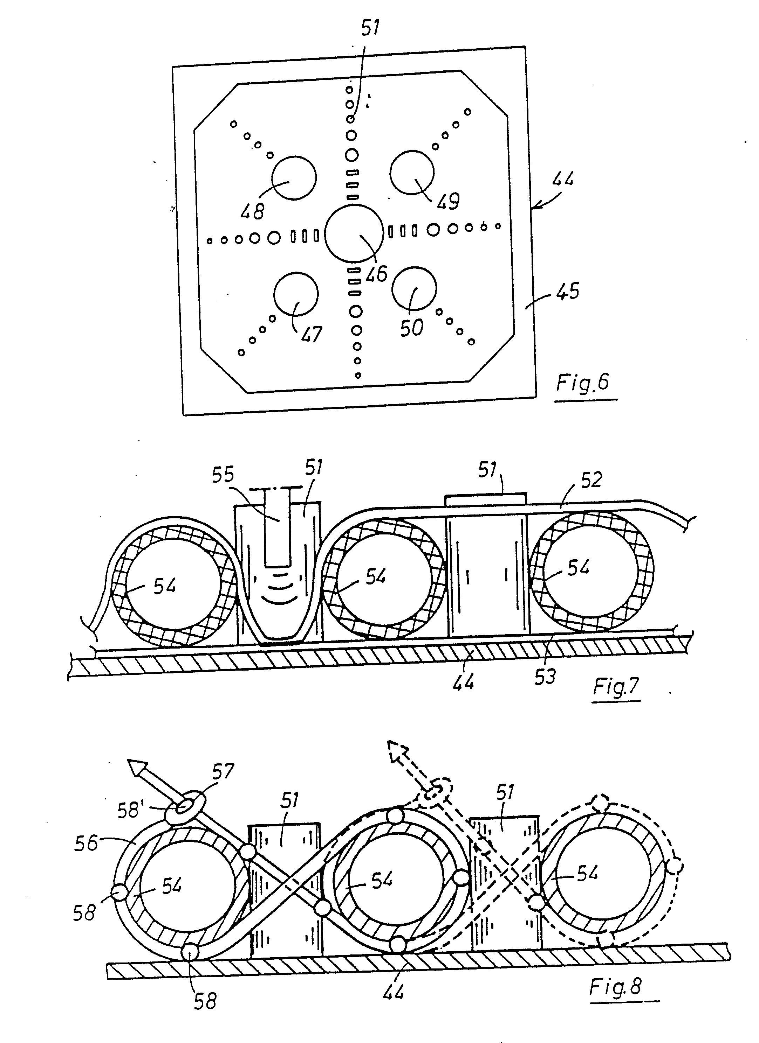

Fig. 5 zeigt eine abgewandelte Ausführungsform einer Anschlußeinrichtung 36 für das äußere Ende eines verlegten Blähschlauches 37. Die Anschlußeinrichtung 36 besteht hier aus einem abgewinkelten Rohrstück 38, dessen eines Endstück als Schlauchtülle 39 ausgebildet ist, auf dem das Schlauchende festgespannt ist. Das andere Endstück 40 ist in einen Druckmittel-Durchgangs-kanal 41 der Kammerplatte 1 eingesteckt und mittels eines O-Ringes oder durch Verkleben abgedichtet und mündet in die im oberen Eckbereich der Kammerplatte vorgesehene Durchgangsbohrung 10. Bei geschlossenem Kammerplattenpaket stehen die Durchlaßöffnungen 10 der einzelnen Kammerplatten 1, 1' miteinander in Verbindung, so daß durch diesen durchgehenden Druckmittelkanal das Preßmedium zu den einzelnen Blähschläuchen 37 zugeleitet wird. Das Rohrstück 38 ist oberflächenbündig in eine Ausnehmung 42 der Kammerplatte eingelegt und durch einen aufgeschraubten Anschlag 43 rückwärtig abgestützt. Zweckmäßigerweise sind di jeweils auf der anderen Hauptfläche der Kammerfilterplatte 1, 1' verlegten Blähschläuche über eine gleichartige Anschlußeinrichtung 36 an die an der anderen oberen Ecke der Kammerplatten vorgesehene Durchgangsöffnung 11 angeschlossen.

Zur Verlegung der Blähschläuche in den beispielsweise in Fig. 1 gezeigten Verlegezustand dient die in Fig. 6 dargestellte Verlegematrix 44, die eine Größe etwa gleich der Kammerplatte 1 besitzt und die einen dem Einspannrand 2 entsprechenden erhabenen Randbereich 45 sowie dem Trübezufuhrkanal 7 und den vier Stutzen 3, 4, 5, 6 angepaßte, vorstehende Bereiche 46, 47, 48, 49, 50 aufweist. Ferner ist die Verlegematrix 44 mit mehreren Reihen von Stehbolzen 51 bestückt, die jeweils zur Vorfixierung und Distanzierung der Schlauchwindungen beim Verlegen dienen. Nach dem Verlegen wird der Blähchlauch mittels Bandpaaren 52/53 fixiert. Das Band 53 ist vor dem Verlegen des Schlauches bereits auf die Verlegematrix 44 aufgelegt, vgl. Fig. 7, und nach dem Verlegen wird das über die Schlauchwindungen 54 verlegte obere Band 52 mittels beispielsweise eines Ultraschweiß-Stempels 55 jeweils zwischen zwei benachbarten Schlauchwindungen 54, 54 an das untere Band 53 angeschweißt, vgl. auch Fig. 1.

Fig. 8 veranschaulicht eine alternative Möglichkeit zur Fixierung der Schlauchwindungen 54 in ihrem Verlegezustand. Hier sind sogenannte Blitzbinder verwendet, die jeweils aus einer Schnur 56 bestehen, die an einem Ende eine Öse 57 und über ihre Länge verteilt mehrere Rastknoten 58 aufweist. Die Schnur 56 ist jeweils in Form einer "8" um zwei benachbarte Schlauchwindungen 54 geschlungen und mit ihrem vorderen Ende durch die Öse 57 gezogen ist, wobei die durch die Öse 57 hindurchgezogene Rastverdickung 58' den Blitzverschluß im Zusammenwirken mit der Öse 57 zusammenhält.

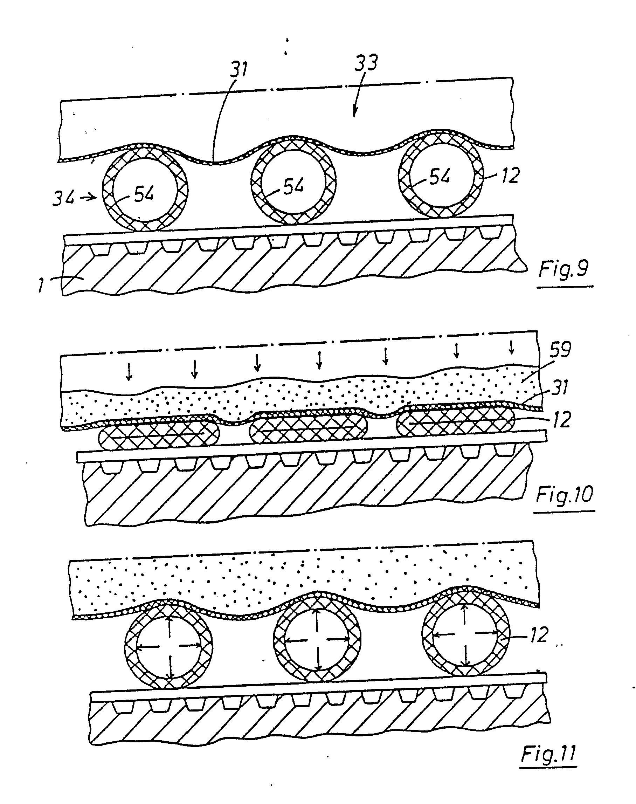

Die Fig. 9 bis 11 veranschaulichen die Wirkungsweise des Blähschlauches 12. Zu Beginn eines Filtrationsprozesses (Fig. 9) sind die Schläuche 54 aufgrund ihrer Eigenelastizität aufgeweitet. Beim Einlaß der Trübe (Fig. 10) wird der Blähschlauch 12 unter dem hohen Druck der Trübe zusammengedrückt, wobei auf dem ch 31 ein Filterkuchen 59 anwächst. Nach Abschaltung der Trübezufuhr wird der Blähschlauch 12 mit einem Druckmittel, beispielsweise mit Druckluft, beaufschlagt, wobei der Filterkuchen 59 die gewünschte Nachpressung erfährt.

**Ansprüche**

1. Kammerfilterpresse, mit mindestens an einer Seite von einem Filtertuch überspannten Kammerplatten, wobei jeweils zwei benachbarte Kammerplatten mit einem äußeren, umlaufenden Einspannrand aneinanderliegen und zwischen sich eine Filterkammer einfassen, welche ihrerseits durch das Filtertuch in einen Filterkuchenraum und in einen Filtratraum unterteilt ist, und mit in den Filtraträumen angeordneten Nachpreßeinrichtungen für die Filterkuchen, dadurch gekennzeichnet, daß die Nachpreßeinrichtungen jeweils aus einem mit eng benachbarten Windungen auf einer Hauptfläche der zugehörigen Kammerplatte (1) verlegten und eine Druckmittelanschlußeinrichtung (16) aufweisenden Blähschlauch (12) besteht.

2. Kammerfilterpresse nach Anspruch 1, dadurch gekennzeichnet, daß der Blähschlauch (12) etwa spiralförmig in einer Ebene verlegt ist.

3. Kammerfilterpresse nach Anspruch 1 oder 2, dadurch gekennzeichnet, daß auf beiden Seiten jeder Kammerplatte (1) je ein Blähschlauch (12, 13) verlegt ist und daß jede Kammerplatte auf beiden Seiten von einem Filtertuch (31, 32) überspannt ist.

4. Kammerfilterpresse nach den Ansprüchen 1, 2 oder 3, dadurch gekennzeichnet, daß das innere Schlauchende (14) verschlossen ist und daß die Anschlußeinrichtung (16, 36) für das äußere Schlauchende (15) in die Kammerplatte (1) eingelassen ist.

5. Kammerfilterpresse nach Anspruch 4, dadurch gekennzeichnet, daß die Anschlußeinrichtung (16) eine zweiteilige, zusammenspannbare Schlauchwanddurchführung, welche ein in einen Plattendurchbruch (18) einsteckbares, mit einem abgewinkelten Durchlaßkanal (20) versehenes Paßstück (19) umfaßt, und ein in eine randseitige Einpaßöffnung (23) einsetzbares Anschlußstück (24) aufweist, welches einen auf den Durchlaßkanal (20) des Paßstückes (19) ausgerichteten Druckmittelkanal (25) besitzt und welches über einen flexiblen Schlauch an eine außerhalb der Kammerplatten angeordnete Druckmittelzuleitung anschließbar ist.

6. Kammerfilterpresse nach Anspruch 4, dadurch gekennzeichnet, daß die Anschlußeinrichtung (36) aus einer rohrförmigen, mit einem Schlauchtüllen-Endstück (39) in das äußere Schlauchende eingesteckten Rohrstück (38) besteht, deren anderes Endstück (40) in eine in einen Druckmitteldurchgangskanal (10) der Kammerplatte (1) mündenden Stichkanal (41) der Kammerplatte dicht eingesetzt ist.

7. Kammerfilterpresse nach Anspruch 6, dadurch gekennzeichnet, daß das Rohrstück (38) abgewinkelt ist und daß die Rückseite des in den Stichkanal (41) eingesetzten Endstückes (40) durch einen an der Kammerplatte angebrachten Anschlag (42) abgestützt ist.

8. Kammerfilterpresse nach den Ansprüchen 1, 2 oder 3, dadurch gekennzeichnet, daß jeder der Blähschläuche (12, 13) in seinem Verlegezustand durch Befestigungsmittel (52/53, 56) zu einem mattenartigen Flächengebilde zusammengehalten ist.

9. Kammerfilterpresse nach Anspruch 8, dadurch gekennzeichnet, daß die Befestigungsmittel aus jeweils zwei benachbarten Schlauchwindungen (54) umschließenden Schnüren (56) bestehen, die an einem Ende eine Öse (57) und auf ihrer Länge verteilte Rastknoten (58) aufweisen.

10. Kammerfilterpresse nach Anspruch 8, dadurch gekennzeichnet, daß die Befestigungsmittel aus das mattenförmige Flächengebilde zwischen sich einfassenden, jeweils zwischen zwei benachbarten Windungen (54) miteinander verbundenen Bändern (52, 53) bestehen.

11. Hilfsvorrichtung zur Verlegung des Blähschlauches bei Kammerfilterpressen nach Anspruch 1, gekennzeichnet durch eine Verlegematrix (44) in Form einer kammerplattengroßen Grundplatte (45), welche mit die Windungen (54) des Blähschlauches (12) vorfixierenden und distanzierenden Schlauchumlenkbolzen (51) bestückt ist.

0 284 906

Fig.1

Fig.5

Fig.2

Fig.3

Fig.4

Fig.6

Fig.7

Fig.8

_Fig.9_

_Fig.10_

_Fig.11_

Europäisches
Patentamt

# EUROPÄISCHER RECHERCHENBERICHT

Nummer der Anmeldung

EP  88 10 4233

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-1 786 274  (LANG)<br>* Figuren 1,2,3,9; Seite 6, Zeilen 15-21,27 *<br>--- | 1-4,6,8 | B 01 D  25/12 |
| Y,D | DE-A-3 527 556  (RITTERSHAUS & BLECHER)<br>* Figuren 1,2,6-9; Spalte 7, Zeilen 12-15; Spalte 8, Zeilen 45-63 *<br>--- | 1-4,6,8 | |
| A | WO-A-8 101 665  (HALLEN)<br>* Figuren 1-4; Seite 3, Absatz 2 *<br>--- | 1,3,4 | |
| A | US-A-2 930 539  (BREMER)<br>* Figuren 1,5; Spalte 1, Zeilen 33-38 *<br>--- | 10,11 | |
| A | DE-A-3 025 148  (KÜHN, VIERHAUS & CIE AG)<br>* Figuren 2,3; Anspruch 1 *<br>------ | 11 | |

|  |  |
|---|---|
| | **RECHERCHIERTE SACHGEBIETE (Int. Cl.4)** |
| | B 01 D<br>B 29 D<br>B 65 H |

Der vorliegende Recherchenbericht wurde für alle Patentansprüche erstellt

| Recherchenort | Abschlußdatum der Recherche | Prüfer |
|---|---|---|
| DEN HAAG          - | 29-06-1988 | CZECH B.P. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
............................................................................
& : Mitglied der gleichen Patentfamilie, übereinstimmendes
    Dokument

EPO FORM 1503 03.82 (P0403)